# EUROPEAN PATENT APPLICATION

(11) **EP 1 739 117 A1**
(43) Date of publication of application: **03.01.2007**
(21) Application number: 05721655.8
(22) Date of filing: 30.03.2005
(51) Int. Cl.: C08J 3/12, C08L 21/00

(54) **METHOD AND APPARATUS FOR PRODUCING RUBBERY POLYMER**

(30) Priority: 31.03.2004 JP 2004104372; 27.04.2004 JP 2004130726
(71) Applicant: ZEON CORPORATION, Chiyoda-ku Tokyo 100-8323 (JP)
(72) Inventor: HIKIDA, Kazuhiro; c/o ZEON CORPORATION;, Chiyoda-ku, Tokyo 1008246 (JP); KUTAMI, Hirotaka; c/o ZEON CORPORATION;, Chiyoda-ku, Tokyo 1008246 (JP); KOBAYASHI, Naoyuki; c/o ZEON CORPORATION;, Chiyoda-ku, Tokyo 1008246 (JP); ERBE, David, R.; c/o ZEON CORPORATION;, Chiyoda-ku, Tokyo 1008246 (JP)
(74) Representative: Albrecht, Thomas
(86) International application number: PCT/JP2005/006066
(87) International publication number: WO 2005/095496

(57) **Abstract**

A method of production of a rubbery polymer by adding a coagulating agent to a polymer latex to make the rubbery polymer ingredient coagulate, the method of production of a rubbery polymer having a step of using a crusher pump to make the rubbery polymer ingredient coagulate to obtain a crumb slurry, using as the crusher pump a pump having a head of 10 m or more. According to this invention, in a method of production of a rubbery polymer by adding a coagulating agent to a polymer latex to make the rubbery polymer ingredient coagulate, an improvement of the operation efficiency and a reduction of the production process and production equipment are made possible and a reduction of the equipment costs and a reduction of the production costs can be achieved.

## Description

### TECHNICAL FIELD

The present invention relates to a method of production of a rubbery polymer by adding a coagulating agent to a polymer latex to cause the rubbery polymer ingredient to coagulate and to an apparatus for production used in this method of production.

### BACKGROUND ART

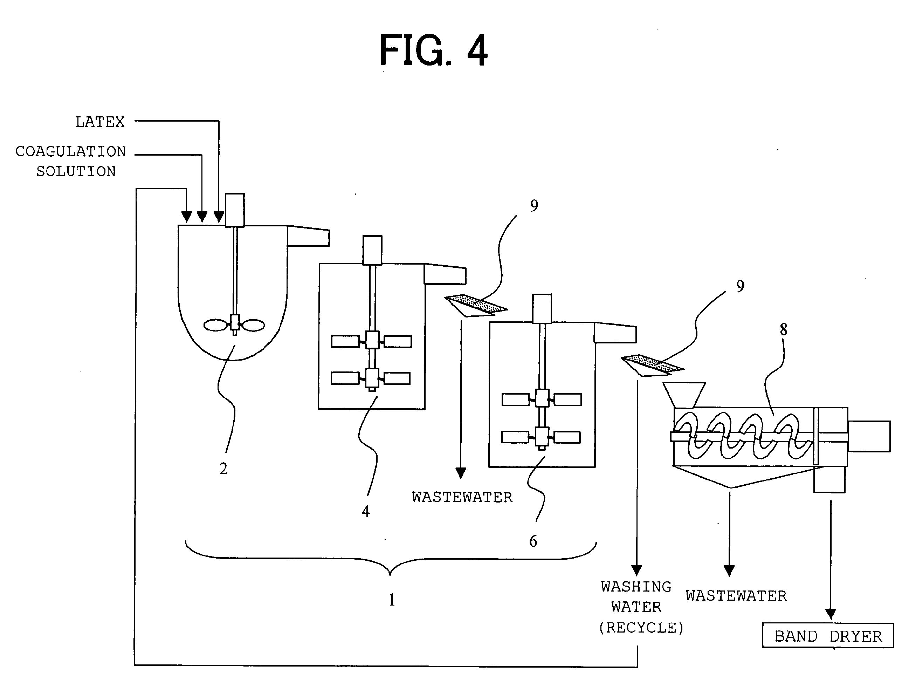

In the process of producing a rubbery polymer from a polymer latex obtained by emulsion polymerization, as shown in for example FIG. 4, a coagulation and washing system 1 comprised of large sized coagulation tanks 2 and 4 and a washing tank 6 is used to deposit and wash a rubbery polymer ingredient, then a squeezer 8 is used to squeeze the moisture from it, then a band dryer, air flow dryer, extrusion dryer, or other drying apparatus is used to obtain a dry state rubbery polymer. Note that the drying apparatus is usually connected at its downstream side to a baler. The dried rubbery polymer is usually finally baled into the final product.

However, in the process of production of a rubbery polymer, such as shown in FIG. 4, a coagulation and washing system comprised of large sized coagulation tanks and a washing tank has been required, so the operation was troublesome, the operation efficiency was poor, massive installation space was required, and the equipment costs and production costs increased.

To solve this problem, for example, in Patent Document 1, the method was attempted of directly feeding the polymer latex and coagulating agent inside a screw extruder and coagulating, squeezing, and drying the result inside the extruder. However, with the method described in this document, the coagulation was performed in the screw grooves, so the polymer obtained by the coagulation became small in shape and ended up flowing out from the squeezing slits together with the water, so there was the defect that the rate of recovery of the polymer ended up remarkably falling.

To make up for this defect, in Patent Document 2, a 60 to 200°C boiling point organic solvent, such as toluene, to a coagulation zone formed inside a screw extruder to enlarge the coagulated polymer is studied. With the method described in this document, it is probably true that the above-mentioned problem of Patent Document 1 can be solved. However, with the method described in this document, there was the defect that the amount of organic solvent remaining in the final product increased.

Further, Patent Document 3 discloses adding a coagulation solution to a cement-like rubber solution to produce a rubbery polymer wherein a crusher pump is used to bring a cement-like rubber solution and coagulation solution into contact to cause the rubbery polymer ingredient to be deposited. It is described that, according to the invention described in this document, the operation efficiency is improved, the production process and production equipment can be slashed, and a reduction in the equipment costs and a reduction in the production costs can be achieved. However, the method disclosed in this document is a method for producing a rubbery polymer from a cement-like rubber solution obtained by solution polymerization. Further, in this document, the rubbery polymer was squeezed and dried using a twinscrew extruder, so there was the problem that the production costs ended up rising.
[Patent Document 1] Japanese Patent Publication (A) No. 57-1742
[Patent Document 2] Japanese Patent Publication (A) No. 62-1703
[Patent Document 3] Japanese Patent Publication (A) No. 10-100145

### DISCLOSURE OF INVENTION

### PROBLEM TO BE SOLVED BY THE INVENTION

An object of the present invention, in view of this situation, is to provide a method of production of a rubbery polymer by adding a coagulating agent to a polymer latex to cause a rubbery polymer ingredient to coagulate, wherein the operation efficiency can be improved, the production process and production equipment can be slashed, and a reduction in the equipment costs and a reduction in the production costs can be achieved.

### MEANS FOR SOLVING THE PROBLEM

To achieve the above object, a method of production of a rubbery polymer according to a first aspect of the present invention is a method of production of a rubbery polymer comprising feeding a polymer latex and a coagulation solution containing a coagulating agent to a crusher pump and bringing the polymer latex and the coagulating agent into contact so as to make the rubbery polymer ingredient coagulate and obtain a crumb slurry containing a crumb rubbery polymer, wherein the crusher pump has a head of 10 m or more.

In the first aspect of the present invention, the rubbery polymer ingredient is coagulated using a crusher pump. Therefore, the conventionally used coagulation system comprised of large sized tanks becomes unnecessary, the production process and production equipment can be slashed, and a reduction in the equipment costs and a reduction in the production costs can be achieved. Further, in the first aspect, as the crusher pump, a pump having a head of 10 m or more, preferably 12 m or more is used. For this reason, it is possible to prevent the pump from being clogged by the rubbery polymer ingredient and the dispersibility of the crumb rubbery polymer in the slurry discharged from the pump can be improved.

Alternatively, a method of production of a rubbery polymer according to a second aspect of the present invention has
a first step of feeding a polymer latex and a coagulation solution containing a coagulating agent to a crusher pump and bringing the polymer latex and the coagulating agent into contact to make the rubbery polymer ingredient coagulate and obtain a crumb slurry containing a crumb rubbery polymer and
a second step of running the crumb slurry from a discharge port of the pump through a pipe and releasing it into the atmosphere,
a ratio (L/D) of a length L of the pipe and an inside diameter D of a discharge port of the pump being not more than 20.

In the second aspect of the present invention, in the same way as the above first aspect, the rubbery polymer ingredient is coagulated using a crusher pump. Therefore, the conventionally used coagulation system comprised of large sized tanks becomes unnecessary, the production process and production equipment can be slashed, and a reduction in the equipment costs and a reduction in the production costs can be achieved. Further, in the second aspect, a ratio (L/D) of a length L of the pipe and an inside diameter D of a discharge port of the pump is made not more than 20. For this reason, it is possible to prevent the pump from being clogged by the rubbery polymer ingredient and the dispersibility of the crumb rubbery polymer in the slurry at the time of release can be improved.

In the method of production of the present invention, preferably the method has
a first step of feeding a polymer latex and a coagulation solution containing a coagulating agent to a crusher pump and bringing the polymer latex and the coagulating agent into contact to make the rubbery polymer ingredient coagulate and obtain a crumb slurry containing a crumb rubbery polymer and
a second step of running the crumb slurry from a discharge port of the pump through a pipe and releasing it into the atmosphere,
wherein the crusher pump has a head of 10 m or more and a ratio (L/D) of a length L of the pipe and an inside diameter D of a discharge port of the pump is not more than 20.

By using as the crusher pump a pump having a head of 10 m or more and making a ratio (L/D) between a length L of the pipe and an inside diameter D of a discharge port of the pump 20 or less, the effects of the present invention can be further raised.

In the present invention, the crusher pump may be any pump having functions enabling the polymer latex and coagulation solution to be brought into contact to make the polymer coagulate and enabling the thus obtained crumb slurry to be crushed. Further, one provided with rotating blades having the function of discharging the crumb slurry to the outside of the pump is preferable.

In the present invention, for example, when using a pump providing with such rotating blades, it is preferable to feed the polymer latex and the coagulation solution before the rotating blades in the flow direction and to bring the polymer latex and coagulation solution into contact before contacting the rotating blades. By doing this, the rubbery polymer can be made to coagulate before the rotating blades in the flow direction, and the rubbery polymer obtained by the coagulation can be crushed by the rotating blades and discharged outside the pump in a suitable size.

In the method of production of the present invention, preferably the crusher pump has
first blades for crushing the coagulated rubbery polymer ingredient and
second blades provided at the outer circumference of the first blades.

The first blades and second blades are rotating blades able to rotate and have the function of discharging the crumb slurry to the outside of the pump. In the present invention, preferably together with the first blades, by providing the second blades at the outer circumference of the first blades, the pump can be improved in discharge head and the pump can be effectively prevented from being clogged by the rubbery polymer ingredient.

The first blades are rotating blades mainly meant for crushing the coagulated rubbery polymer ingredient. Further, the second blades are rotating blades provided at the outer circumference of the first blades and mainly meant for dispersing the rubbery polymer crushed by the first blades and for discharging the rubbery polymer together with the serum water (water containing coagulating agent) to outside the pump. Note the first blades may have, together with the function of crushing the rubbery polymer ingredient, a function of dispersing and discharging the rubbery polymer ingredient. Similarly, the second blades may have, together with the function of dispersing and discharging the rubbery polymer ingredient, a function of crushing the rubbery polymer ingredient.

In the method of production of the present invention, preferably the crusher pump has
a stationary frame between the first blades and the second blades,
the stationary frame being formed with through holes for discharging the rubbery polymer ingredient crushed by the first blades from the first blades to the direction of the second blades.

In the crusher pump, by forming the stationary frame between the first blades and the second blades, the rubbery polymer ingredient crushed to a certain size by the first blades can be further crushed by the stationary frame, so the rubbery polymer ingredient can be sufficiently crushed and the rubbery polymer ingredient can be made a suitable size for discharge outside of the pump. Further, by forming the stationary frame with through holes for discharge from the first blades to the direction of the second blades and adjusting the sizes of the through holes, the rubbery polymer ingredient obtained by the crushing can be controlled in size.

In the method of production of the present invention, preferably the method further has a washing step of washing the crumb slurry by water so as to remove the coagulating agent from the crumb rubbery polymer.

In the washing step, washing water is fed to the crumb slurry so as to remove the coagulating agent adhering to the surface of the crumb rubbery polymer and separate the moisture and crumb rubbery polymer.

In the method of production of the present invention, preferably the method further has
a squeezing step of squeezing the moisture from the crumb slurry to obtain a crumb rubbery polymer and
a step of drying by heat the crumb rubbery polymer from which the moisture has been squeezed out.

In the method of production of the present invention, more preferably the crumb slurry is washed, squeezed and/or dried after being run from the discharge port of the pump through the pipe and released to the atmosphere.

In the method of production of the present invention, preferably the method further has the step of discharging the crumb slurry into a tank and stirring the crumb slurry in the tank.

In the present invention, preferably the crumb slurry run from the discharge port of the crusher pump through a pipe and released into the atmosphere is stirred and held using a stirring equipment, then is washed, squeezed, and dried. By stirring and holding the crumb slurry, contact of the coagulating agent with the rubbery polymer ingredient can be promoted and the rubbery polymer ingredient can be made to coagulate substantially completely. The stirring equipment for stirring and holding is not particularly limited. Various types of stirring equipments may be used, but for example a high shear mixer having a stirrer provided with rotating blades and fixed blades at the bottom of a tank etc. may be used.

The polymer latex able to be used for the method of the present invention is not particularly limited. For example, a latex of a butadiene polymer, isoprene polymer or other homopolymer comprised of only conjugated diene; an ethyl acrylate polymer or other homopolymer comprised of only acrylate; or other various types of homopolymers and, in addition, a latex of a butadiene/isoprene copolymer or other copolymer comprised of only conjugated dienes; an acrylonitrile/butadiene copolymer, acrylonitrile/butadiene/isoprene copolymer, acrylonitrile/isoprene copolymer, acrylonitrile/styrene/butadiene copolymer, acrylonitrile/styrene/isoprene copolymer, or other copolymer comprised of unsaturated nitriles and conjugated dienes; a styrene/butadiene copolymer, a styrene/isoprene copolymer, or other copolymer comprised of aromatic vinyl and conjugated dienes; an ethylacrylate/n-butylacrylate copolymer, ethylacrylate/n-butylacrylate/2-methoxyethyl acrylate copolymer, or other copolymer comprised of only acrylates; and various other types of copolymers may be mentioned.

Among these, each polymer latex of copolymers comprised of unsaturated nitriles and conjugated dienes or homo- or co-polymers comprised of only acrylates is preferable, a latex of copolymers comprised of unsaturated nitriles and conjugated dienes is more preferable, and a latex of copolymers comprised of butadienes and acrylonitriles is particularly preferably used in the present invention.

The solids concentration of the polymer latex able to be used in the present invention is usually 5 to 50 wt% or so, preferably 10 to 40 wt% or so.

The polymer latex able to be used in the present invention may for example be obtained by emulsion polymerization or microsuspension polymerization etc., in particular a latex of an emulsion polymer obtained by emulsion polymerization may be mentioned as suitable. The particle size of the polymer particle obtained by the emulsion polymerization and the type and amount used of the emulsifying agent are not particularly limited.

In the present invention, the coagulating agent is not particularly limited. For example, sulfuric acid, hydrochloric acid, or other inorganic acids; acetic acid or other organic acids; calcium chloride, magnesium chloride, magnesium sulfate, aluminum sulfate, barium chloride, and other inorganic salts; and mixtures thereof may be mentioned, it may be suitably determined by the type of the emulsifying agent used for the polymer latex. Among these, as the coagulating agent, an inorganic salt is preferable and calcium chloride, magnesium sulfate, and aluminum sulfate are more preferable.

An apparatus for production of a rubbery polymer according to a first aspect of the present invention comprises
a crusher pump in which a polymer latex and a coagulation solution containing a coagulating agent can be brought into contact and mixed, wherein
the crusher pump has a head of 10 m or more.

An apparatus for production of a rubbery polymer according to a second aspect of the present invention comprises
a crusher pump in which a polymer latex and a coagulation solution containing a coagulating agent can be brought into contact and mixed and
a pipe for releasing a crumb slurry containing a crumb rubbery polymer discharged from a discharge port of the crusher pump into the atmosphere, wherein
a ratio (L/D) of a length L of the pipe and an inside diameter D of a discharge port of the pump is not more than 20.

In the apparatus for production according to a first aspect and a second aspect of the present invention, the crusher pump is not particularly limited, for example it is possible to use the crusher pump used in the above-mentioned method of production of the present invention.

### EFFECTS OF THE INVENTION

According to the present invention, by using a crusher pump to coagulate the rubbery polymer ingredient in the method of production of a rubbery polymer, the conventionally used coagulation system comprised of large sized tanks becomes unnecessary, so the production process and production equipment can be slashed and a reduction of
the equipment costs and a reduction of the production costs can be achieved.

Further, in the present invention, as the crusher pump, a pump having a head of 10 m or more is used. Alternatively, a ratio (L/D) of a length L of the pipe and an inside diameter D of a discharge port of the pump is made not more than 20. Therefore, the pump and the pipe can be prevented from being clogged by the rubbery polymer ingredient and the dispersibility of the crumb rubbery polymer in the slurry can be improved.

### BRIEF DESCRIPTION OF THE DRAWINGS

[FIG. 1] FIG. 1 is a schematic view of an apparatus for production of a rubbery polymer according to an embodiment of the present invention.
[FIG. 2] FIG. 2 is a cross-sectional view of principal parts of a crusher pump according to an embodiment of the present invention.
[FIG. 3] FIG. 3 is a schematic view of an apparatus for production of a rubbery polymer according to an embodiment of the present invention.
[FIG. 4] FIG. 4 is a schematic view of an apparatus for production of a rubbery polymer according to an example of the prior art.
[FIG. 5] FIG. 5 is a cross-sectional view of principal parts of a crusher pump according to an example of the prior art.

### BEST MODE FOR WORKING THE INVENTION

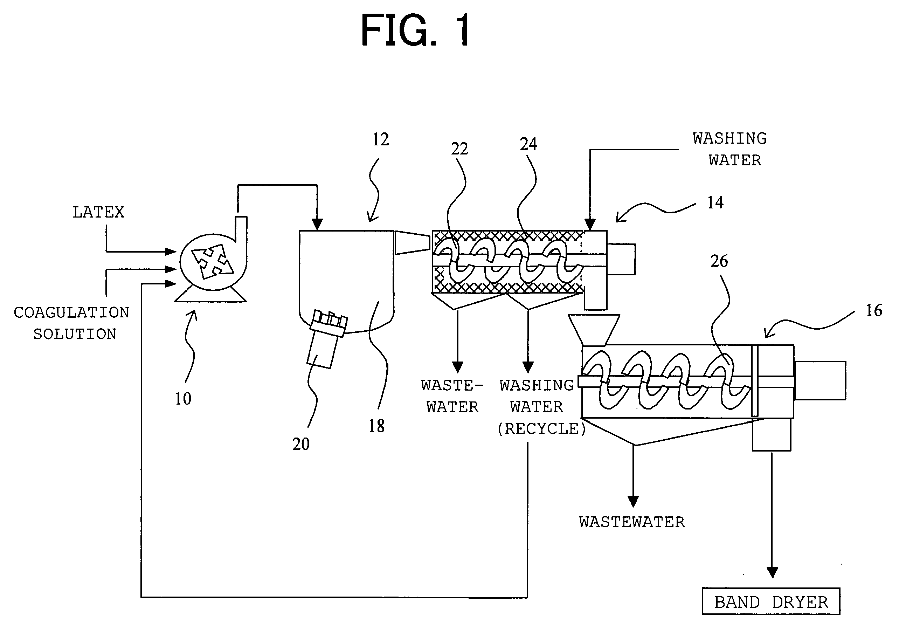

Below, the present invention will be explained based on the illustrated embodiments. As shown in FIG. 1, an apparatus for production of a rubbery polymer according to an embodiment of the present invention has a crusher pump 10, a high shear mixer 12, a rotary screen 14, and a squeezer 16.

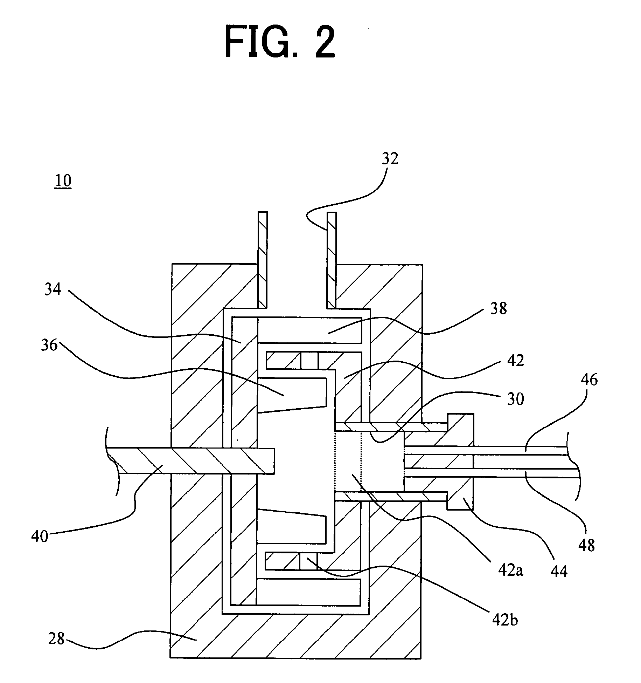

The crusher pump 10, as shown in FIG. 2, is comprised of a pump casing 28 having an intake port 30 and a discharge port 32 and into which a circular rotating body 34 having first blades 36 and second blades 38 is rotatably fit. The rotating body 34 is driven to rotate together with the first blades 36 and second blades 38 by a motor (not shown) connected to a shaft 40. Further, a stator (stationary frame) 42 is arranged between the first blades 36 and second blades 38 so as to cover the first blades 36.

Pluralities of first blades 36 and second blades 38 are provided on the rotating body 34 and rotate together with the rotating body 34 so as to suck in fluid from the intake port 30, crush and disperse the crumbs contained in the fluid, and discharge the crushed crumbs together with the fluid from the discharge port 32.

The first blades 36 are rotating blades for crushing the crumbs contained in the fluid sucked in from the intake port 30. The first blades 36 need only be structured to be able to crush the crumbs. Preferably, the shear rate given to the crushed crumbs is made 200 [1/s] or more.

The second blades 38 are rotating blades for dispersing and discharging the crumbs crushed by the first blades 36. The second blades 38 need only be structured to be able to disperse and discharge the crushed crumbs. While not particularly limited, they are preferably structured to prevent the clearance between the stator 42 and the pump casing 28 from being clogged by crumbs. That is, the second blades 38 are preferably structured to be able to substantially completely disperse the crumbs discharged between the stator 42 and pump casing 28 by rotating around the outer circumference of the stator 42.

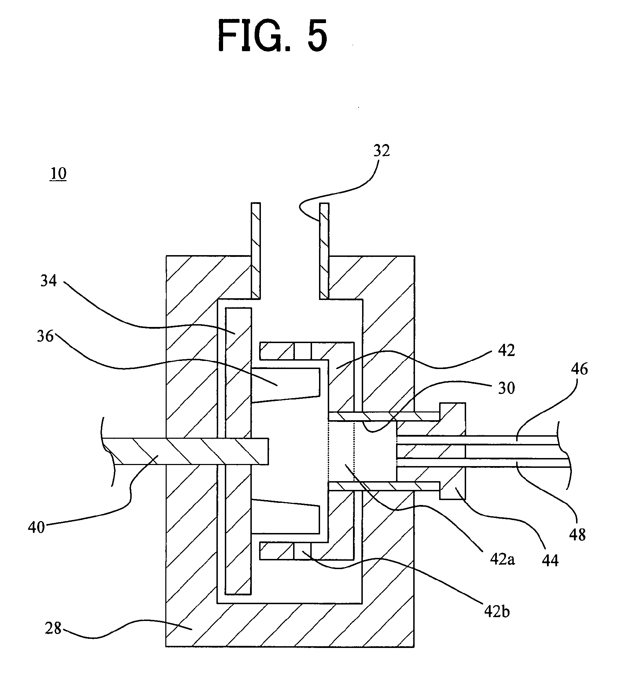

In the present embodiment, together with the first blades 36, second blades are formed at the outer circumference of the first blades, so the discharge head of the pump can be made 10 m or more, preferably 12 m or more, and the pump can be effectively prevented from being clogged by the rubbery polymer ingredient.
A conventional crusher pump 10a, as shown in FIG. 5, has a rotating body 34 on which only first blades 36 for crushing are formed, so the discharge head is low. Therefore, if making the rubber polymer coagulate in the pump, there was the problem that the crumbs obtained by the coagulation ended up clogging the pump 10a. In particular, in the past, the clearance between the stator 42 and the pump casing 28 was remarkably clogged by the crumbs. For this reason, if causing the rubbery polymer ingredient to be coagulated in the conventional crusher pump 10a, due to the clogging of the coagulated crumbs, the crumbs could no longer be discharged outside the pump 10a and continuous production of the crumb slurry containing a crumb rubbery polymer was difficult.
As opposed to this, in the present embodiment, as explained above, the discharge head of the pump can be improved, so the conventional problem of the pump being clogged by the crumbs can be effectively prevented.

The stator 42 is arranged between the first blades 36 and the second blades 38 so as to cover the first blades 36. The stator 42 has a suction hole 42a at its intake port 30 side and through holes 42b at its side faces. The suction hole 42a is a through hole for sending fluid sucked in from the intake port 30 in the direction of the first blades 36. On the other hand, the through holes 42b are through holes for discharging the crumbs crushed by the first blades 36 to a predetermined size or less from the first blades 36 to the direction of the second blades 38. By adjusting the sizes of the through holes 42b, the size of the crumbs discharged can be controlled. The through holes 42b are not particularly limited in shape or size, but for example are adjusted so that the maximum width of the crumbs crushed by the,first blades 36 and discharged in the direction of the second blade 38 becomes 3 to 20 mm or so. If the through holes 42b are too small, the time required for crushing the crumbs becomes longer and the productivity tends to drop. On the other hand, if too large, the pump 10 ends up being liable to be clogged with crumbs.

The intake port 30 is fit with an adapter 44. The adapter 44 is formed with a latex transport pipe 46 as a latex feed means into which a solution state polymer latex is sent and a coagulation solution transport pipe 48 as a coagulation solution feed means into which a coagulation solution containing a coagulating agent is sent.

The latex transport pipe 46 transports a polymer latex including a rubbery polymer polymerized in for example a polymerization tank directly to an intake port 30 of the pump 10. A transport pump is arranged in the middle of the pipe 46.

The coagulation solution transported by the coagulation solution transport pipe 48 is a mixed solution of coagulating agent, such as calcium chloride, and water. The concentration of the coagulating agent in the coagulation solution is made 5 to 35 wt% or so with respect to the coagulation solution as a whole. Further, the amount of feed of the coagulation solution is not particularly limited, but a volume ratio with respect to the polymer latex [polymer latex:coagulation solution] of 1:0.005 to 1:0.2 or so is preferable. If the amount of feed of the coagulation solution is too small, the deposition of the rubbery polymer ingredient in the pump tends to become insufficient. Further, if the amount of feed of the coagulation solution is too large, removal of the coagulating agent in the washing step tends to become difficult.

The adapter 44 is inserted into the intake port 30 so that the polymer latex and coagulation solution sent by the latex transport pipe 46 and coagulation solution transport pipe 48 contact before being mixed by the first blades 36 and second blades 38.

In the present embodiment, the polymer latex and coagulation solution are fed from the intake port 30 through the latex transport pipe 46 and coagulation solution transport pipe 48 separately to the front of the first blades 36 in the flow direction so that this polymer latex and coagulation solution are made to contact each other before the first blades 36 in the flow direction. For this reason, the rubbery polymer coagulates near the vicinity of the first blades 36, the coagulated rubbery polymer is crushed and dispersed by the first blades 36 and second blades 38, and a slurry containing rubbery polymer crumbs of a size suitable for transport (crumb slurry) is formed and discharged from the discharge port 32.

Further, in the present embodiment, in addition to the polymer latex and coagulation solution, if necessary it is possible to use diluting water. As the diluting water, the washing wastewater recovered at the later explained washing step is preferably used. Note that the diluting water is charged into the crusher pump 10 in the state mixed in advance with the polymer latex or coagulation solution.

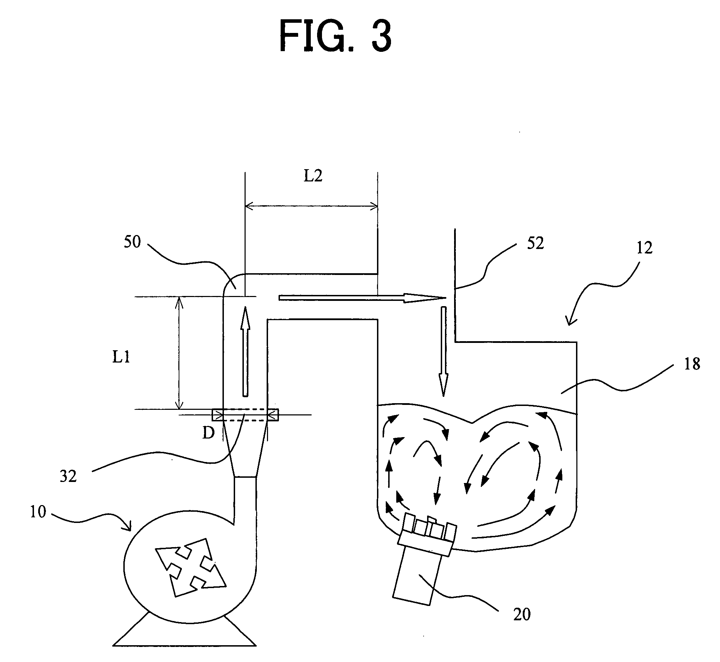

As shown in FIG. 2 and FIG. 3, the pump 10 has a discharge port 32 for discharging the crumb slurry upward. The discharge port 32 has an inside diameter (diameter) D of 50 to 200 mm or so. Further, as shown in FIG. 3, the discharge port 32 is connected to a slurry feed pipe 50. The crumb slurry discharged from the discharge port 32 passes through the slurry feed pipe 50, is released to the atmosphere once, is made to strike against the side wall 52 formed at the joint of the slurry feed pipe 50 and the high shear mixer 12, drops down, and is fed into the tank 18. Note that the slurry feed pipe 50 has a pipe length L of a length from the discharge port 32 of the pump 10 to the releasing part. This pipe length L is the sum of L1 and L2 shown in FIG. 3. The length is 200 to 2000 mm or so. However, when the pump is able to be set oriented horizontally etc., depending on the orientation, the pipe length L may be 0, that is, the discharge port of the pump may be connected directly to the high shear mixer 12 not through the pipe. Further, the ratio of the lengths L1 and L2 in FIG. 3 is not particularly limited and may be suitably adjusted in accordance with the installation space of the facility etc.

In the present embodiment, the ratio (L/D) of the inside diameter D of the discharge port 32 and the length L of the slurry feed pipe 50 is preferably made 20 or less, more preferably 18 or less. By making the ratio (L/D) of the inside diameter D of the discharge port 32 and the length L of the slurry feed pipe 50 the above range, the pipe 50 can be prevented from being clogged by the rubbery polymer crumbs and the dispersibility of the rubbery polymer crumbs in the slurry at the time of release can be improved.

Next, the crumb slurry released into the atmosphere from the slurry feed pipe 50 is stirred and held by a high shear mixer 12. The high shear mixer 12, as shown in FIG. 3, has a tank 18 and a stirrer 20 provided with rotating blades and fixed blades at the bottom of the tank 18. Due to the stirring effect of the rotating blades (not shown) formed at the stirrer 20, a circulating flow is created in the slurry so as to stir and hold the slurry. By stirring and holding the crumb slurry using the high shear mixer 12, it is possible to promote adhesion of the coagulating agent to the rubbery polymer ingredient and make the rubbery polymer ingredient coagulate substantially completely. Note that the crumb slurry is preferably stirred and held for 1 to 20 minutes or so. In the present embodiment, by stirring and holding the crumb slurry using the high shear mixer, it is possible to efficiently make the coagulating agent adhere to the rubbery polymer ingredient in the crumb slurry, so the rubbery polymer ingredient in the crumb slurry can be made to coagulate substantially completely by a short time of stirring and holding.

Next, the rotary screen 14 is used to wash the crumb slurry to remove the coagulating agent adhered to the surface of the crumb rubbery polymer, separate the moisture and crumb rubbery polymer, and obtain crumbs in a state containing moisture.

The crumb slurry is washed by feeding washing water into the rotary screen 14 and rotating the screw 22 and screen 24. The washing reduces the concentration of the coagulating agent to 1000 ppm or less. The amount of the water used for the washing is preferably 1 to 10 times the rubbery polymer ingredient by weight ratio.

Note in the washing wastewater produced in the washing step, the washing wastewater with a relatively low coagulating agent concentration is preferably recovered and charged as diluting water into the crusher pump 10 again.

Next, the squeezer 16 is used to squeeze the moisture from the washed crumbs in the state containing moisture. The squeezer 16 has a rotatable screw 26 inside it. This screw 26 is used to squeeze the moisture from the crumbs, whereby crumbs adjusted to a moisture content of 10 wt% or so are obtained.

Next, the squeezed crumbs are dried by heating by a band dryer to obtain crumbs in a state substantially not containing any moisture (moisture content of 0.5 wt% or less). The temperature when drying the crumbs is made 40 to 100°C or so.

Next, the dried crumbs are for example discharged in a flake shape, then introduced into a baler (not shown) where they are compressed to a suitable size as final products (bales).

In the method of production of a rubbery polymer according to the present embodiment, the rubbery polymer ingredient is coagulated using the crusher pump 10, so the conventionally used coagulation system comprised of large sized tanks becomes unnecessary. Therefore, the production process and production equipment can be slashed and a reduction of the equipment costs and a reduction of the production costs can be achieved. Further, in the present embodiment, since the rubbery polymer ingredient is coagulated by a high crumb concentration, the amount of the washing water or coagulating agent used can be slashed. Further, the operation becomes simple and the product loss when switching the type of the rubbery polymer to be produced etc. can be reduced and the switching time shortened, so the operation efficiency is improved.

Further, in the present embodiment, as the crusher pump 10, a pump 10 formed with the first blades 36 and with the second blades at the outer circumference of the first blades is used, so the pump 10 can be raised in discharge head to 10 m or more, preferably 12 m or more. Further, in the present embodiment, the ratio (L/D) of the length L of the slurry feed pipe 50 and the inside diameter D of the discharge port 32 of the pump is made 20 or less, preferably 18 or less. For this reason, the pump and the pipe can be prevented from being clogged by the rubbery polymer ingredient and the dispersibility of the crumb rubbery polymer in the slurry discharged from the pump can be improved.

Note that the present invention is not limited to the above-mentioned embodiments and can be modified in various ways within the scope of the present invention.

For example, in the above-mentioned embodiments, the method of production of a rubbery polymer having the step of using a high shear mixer 12 to stir and hold the crumb slurry obtained by using the crusher pump 10 to coagulate the rubbery polymer ingredient was illustrated, but it is also possible to employ a step of charging the crumb slurry into the rotary screen without going through the stirring and holding step.

Further, in the above-mentioned embodiments, the method of charging the polymer latex and coagulation solution separately into the crusher pump 10 was illustrated, but a method of charging the polymer latex and coagulation solution into the crusher pump 10 in a state mixed in advance or a method of mixing them right before charging into the crusher pump 10 and then charging them into the crusher pump 10 may also be used.

Further, in the above-mentioned embodiments, the rotary screen 14 was used to wash the crumb slurry, but the crumb slurry may also be washed using a wedge-shaped screen.

### Examples

Below, the present invention will be explained based on more detailed examples, but the present invention is not limited to these examples. Further, as the method for confirming the effects of the present invention, the state of clogging of the pipe connected to the pump discharge port by the obtained crumb slurry and the dispersibility of the crumbs in the crumb slurry released into the atmosphere were evaluated by visual observation. Regarding the dispersibility of crumbs, a case where the crumbs were dispersed without sticking together was deemed good.

### Example 1

First, a polymer latex comprised of an NBR (acrylonitrile-butadiene rubber) latex and a coagulating agent comprised of a calcium chloride aqueous solution were prepared.

Next, the NBR latex, calcium chloride aqueous solution, and diluting water were used to produce NBR in an apparatus for production having a crusher pump 10 shown in FIG. 1 to FIG. 3. Note that the amounts of the NBR latex, calcium chloride aqueous solution, and diluting water were adjusted so that the concentration of crumbs with respect to the slurry as a whole became 4.7 wt%.

Further, as the crusher pump 10, the pump comprised of an Inline Mixer (made by Silverson, Model 450LS) which have a stator 42 and formed with second blades 38 at the outer circumference of the first blades 36, as shown in FIG. 2, was used. Note that the pump speed was made 3000 rpm, the flow rate was made 25 m³/h, and the discharge head was 15 m. Further, the inside diameter (D) of the discharge port 32 of the pump 10 shown in FIG. 3 and the length from the discharge port 32 to the release part of the slurry feed pipe 50, that is, the pipe length (L=L1+L2), were made D=48 mm, L=800 mm, and L/D=16.67.

### Example 2

Except for not using the stator 42 shown in.FIG. 2 in the crusher pump 10, the same procedure was followed as in Example 1 to produce NBR.

### Reference Example 1

Except for using as the crusher pump the Inline Mixer (made by Silverson, Model 450LS) shown in FIG. 5, the same procedure was followed as in Example 1 to produce NBR. That is, in Reference Example 1, as the crusher pump, a crusher pump 10a not having second blades 38 was used. Note that in Reference Example 1, the pump speed was made 3000 rpm, the flow rate was made 25 m³/h, and the discharge head was 8 m. Further, the concentration of crumbs with respect to the slurry as a whole was made 4.0 wt%.

### Reference Example 2

In the same way as Reference Example 1, a crusher pump comprised of the Inline Mixer (made by Silverson, Model 450LS) shown in FIG. 5 was used to produce NBR. Note that in Reference Example 2, the pump speed was made 1500 rpm, the flow rate was made 25m³/h, and the discharge head was made 5 m. Further, the concentration of crumbs to the slurry as a whole was made 4.1 wt%.

**Table 1**

| | | Pump conditions | | | | | | |
|---|---|---|---|---|---|---|---|---|
| | Crumb conc. [%] | 2nd blades | Stator | Speed [rpm] | Discharge head [m] | L/D | Pipe clogging | Crumb dispersibility |
| Ex.1 | 4.7 | Yes | Yes | 3000 | 15 5 | 16.67 | No | Good |
| Ex.2 | 4.7 | Yes | No | 3000 | 15 5 | 16.67 | No | Good |
| Ref. Ex. 1 | 4.0 | No | Yes | 3000 | 8 | 16.67 | Yes | Poor |
| Ref. Ex. 2 | 4.1 | No | Yes | 1500 | 5 | 16.67 | Yes | Poor |

### Evaluation 1

From Table 1, Examples 1 and 2 with discharge heads of 15 m did not exhibit any clogging of the pumps 10 and slurry feed pipes 50 regardless of the presence or absence of the stators 42. Further, the dispersibilities of the crumbs released to the atmosphere were good.

On the other hand, Reference Examples 1 and 2 with discharge heads of 8 m and 5 m respectively, compared with Examples 1 and 2, exhibited clogging of the pumps 10 by crumbs regardless of the crumb concentrations being made low. In particular, in Reference Examples 1 and 2, the clearances between the stators 42 and pump casings 28 were clogged by crumbs which caused failure of discharge of crumbs from the discharge ports 32 and the inability of continuous operation.

From these results, it was confirmed that, as the crusher pump, use of a pump having a discharge head of at least 10 m is preferable, in particular use of a pump formed with first blades 36 and with second blades 38 at the outer circumference of the first blades 36 so as to improve the discharge head is preferable.

### Examples 3, 4 and Reference Example 3

The same procedure was followed as in Example 1 to prepare a polymer latex comprised of an NBR (acrylonitrile-butadiene rubber) latex and a coagulating agent comprised of a calcium chloride aqueous solution. Next, the NBR latex, calcium chloride aqueous solution, and diluting water were used to produce NBR in an apparatus for production having a crusher pump 10 shown in FIG. 1 to FIG. 3. Note that the amounts of the NBR latex, calcium chloride aqueous solution, and diluting water were adjusted so that the concentrations of crumbs with respect to the slurry as a whole became the concentrations shown in Table 2.

Further, as the crusher pump 10, Disintegrator (made by Komatsu Zenoah, Model HD4Ms-SC) was used. The pump speed was made 1500 rpm, the flow rate 25 m³/h, and the inside diameter (D) of the discharge port 32 of the pump 10 shown in FIG. 3 and the lengths from the discharge ports 32 to the release parts of the slurry feed pipes 50, that is, the pipe lengths (L=L1+L2), were made the lengths shown in Table 2. Note that the Disintegrator (crusher pumps 10) used in Examples 3, 4 and Reference Example 3 was pump having the first blades 36 and second blades 38 shown in FIG. 2. Further, in Examples 3, 4 and Reference Example 3, the pump had discharge heads of 13 m.

### Example 5 and Reference Example 4

Except for using Inline Mixer (made by Silverson, Model 450LS) as the crusher pump 10 and making the pump speed 3000 rpm and the flow rate 25 m³/h, the same procedure was followed as in Example 3 to produce NBR. Note that the concentrations of crumbs with respect to the slurry as a whole, the inside diameters (D) of the discharge ports 32, and the lengths (L) of the slurry feed pipes 50 were made the concentrations and lengths shown in Table 2. Further, the Inline Mixer (crusher pump 10) used in Example 5 and Reference Example 4 was one having configurations similar to Example 1. That is, pump having the stator 42 and having the second blades 38 formed at the outer circumferences of the first blades 36 was used. Further, in Example 5 and Reference Example 4, the pumps had discharge heads of 15 m.

**Table 2**

| | Crumb conc. [%] | Crusher pump | Pump discharge head [m] | D [mm] | L [mm] | L/D | Pipe clogging | Crumb dispersibility |
|---|---|---|---|---|---|---|---|---|
| Ex. 3 | 16.5 | Disintegrator | 13 | 69.3 | 268.4 | 3.87 | No | Good |
| Ex. 4 | 11.2 | Disintegrator | 13 | 69.3 | 768.4 | 11.09 | No | Good |
| Ex. 5 | 4.7 | Inline Mixer | 15 | 48 | 800 | 16.67 | No | Good |
| Ref. Ex. 3 | 16.5 | Disintegrator | 13 | 69.3 | 1568.4 | 22.63 | Yes | Poor |
| Ref. Ex. 4 | 5.8 | Inline Mixer | 15 | 48 | 3000 | 62.50 | Yes | Poor |

### Evaluation 2

From Table 2, Examples 3 to 5 with ratios (L/D) of the inside diameter (D) of the discharge port 32 and length (L) of the slurry feed pipe 50 of 20 or less did not exhibit any clogging of the slurry feed pipe 50 by crumbs regardless of the crumb concentration. Further, the dispersibility of the crumbs released into the atmosphere was good. In particular, like in Example 3, even when making the crumb concentration a high concentration of 16.5%, good results were obtained.

On the other hand, Reference Examples 3 and 4 with L/Ds greater than 20 were confirmed to have slurry feed pipes 50 clogged with crumbs. Further, the dispersibility of the crumbs discharged into the atmosphere was also poor.

From this result, it was confirmed that the ratio (L/D) of the inside diameter (D) of the discharge port 32 and the length (L) of the slurry feed pipe 50 is preferably 20 or less, more preferably 18 or less.

## Claims

1. A method of production of a rubbery polymer comprising feeding a polymer latex and a coagulation solution containing a coagulating agent to a crusher pump and bringing said polymer latex and said coagulating agent into contact so as to make the rubbery polymer ingredient coagulate and obtain a crumb slurry containing a crumb rubbery polymer, wherein said crusher pump has a head of 10 m or more.

2. The method of production of a rubbery polymer as set forth in claim 1, wherein said crusher pump has
first blades for crushing the coagulated rubbery polymer ingredient and
second blades provided at the outer circumference of said first blades.

3. The method of production of a rubbery polymer as set forth in claim 2, wherein said crusher pump has a stationary frame between said first blades and said second blades.

4. The method of production of a rubbery polymer as set forth in claim 3, wherein through holes for discharging the rubbery polymer ingredient crushed by said first blades from said first blades to the direction of said second blades are formed in said stationary frame.

5. The method of production of a rubbery polymer as set forth in any one of claims 1 to 4, wherein
said method has a step of running said crumb slurry from a discharge port of said crusher pump through a pipe and releasing it into the atmosphere,
a ratio (L/D) of a length L of said pipe and an inside diameter D of the discharge port of said pump being not more than 20.

6. The method of production of a rubbery polymer as set forth in any one of claims 1 to 5, wherein the method further has a washing step of washing said crumb slurry by water so as to remove said coagulating agent from the crumb rubbery polymer.

7. The method of production of a rubbery polymer as set forth in any one of claims 1 to 6, wherein the method further has
a squeezing step of squeezing out the moisture from said crumb slurry to obtain a crumb rubbery polymer and
a step of drying by heating the crumb rubbery polymer from which said moisture has been squeezed out.

8. The method of production of a rubbery polymer as set forth in any one of claims 1 to 7, wherein the method further has a step of discharging said crumb slurry into a tank and stirring said crumb slurry in said tank.

9. The method of production of a rubbery polymer as set forth in any one of claims 1 to 8, wherein said polymer latex is a latex of an unsaturated nitrile-conjugated diene copolymer obtained by emulsion polymerization.

10. The method of production of a rubbery polymer as set forth in any one of claims 1 to 9, wherein said coagulating agent is at least one type selected from the group comprised of calcium chloride, magnesium sulfate, and aluminum sulfate.

11. An apparatus for production of a rubbery polymer comprising
a crusher pump in which a polymer latex and a coagulation solution containing a coagulating agent can be brought into contact and mixed,
said pump having a head of 10 m or more.

12. A method of production of a rubbery polymer having:
a first step of feeding a polymer latex and a coagulation solution containing a coagulating agent to a crusher pump and bringing said polymer latex and said coagulating agent into contact to make the rubbery polymer ingredient coagulate and obtain a crumb slurry containing a crumb rubbery polymer and
a second step of running said crumb slurry from a discharge port of said pump through a pipe and releasing it into the atmosphere,
a ratio (L/D) of a length L of said pipe and an inside diameter D of the discharge port of said pump being not more than 20.

13. An apparatus for production of a rubbery polymer comprising
a crusher pump in which a polymer latex and a coagulation solution containing a coagulating agent can be brought into contact and mixed and
a pipe for releasing a crumb slurry containing a crumb rubbery polymer discharged from a discharge port of said crusher pump into the atmosphere, wherein
a ratio (L/D) of a length L of said pipe and an inside diameter D of the discharge port of said pump is not more than 20.
